# EUROPEAN PATENT APPLICATION

(11) **EP 2 602 149 A2**
(43) Date of publication of application: **12.06.2013**
(21) Application number: 12196068.6
(22) Date of filing: 07.12.2012
(51) Int. Cl.: B60N 2/06, B60N 2/22, B60N 2/20

(54) **Improvements in seating**

(30) Priority: 07.12.2011 GB 201120999
(71) Applicant: Lee, James Shing Hin, Hong Kong (HK)
(72) Inventor: Lee, James Shing Hin, Hong Kong (HK)
(74) Representative: Chettle, Adrian John

(57) **Abstract**

High density seating, for example for aircraft use, includes a seatback cushion 2 of adjustable rate, and a lightweight adjustable headrest 11. Other aspects of the invention relate to a literature rack 14, a footrest 17, a cup holder 24, a book stand 27, a headset hook 31 and a vanity mirror 33.

## Description

The present invention relates to seating, in particular lightweight, high density seating for use in vehicles, theatres, lecture halls and the like.

Lightweight comfortable seating is a desirable aim. Light weight is a particularly important factor in transport applications, especially in aircraft, since less fuel is used and/or greater payload is possible. A simple or simplified construction is also desirable since where common components can be used for several seats, a saving in material and maintenance cost and/or weight is possible. Ideally seating should be multi-functional, and offer the occupant a range of features to improve comfort and versatility; however those features should not introduce a weight or cost penalty.

What is required is a multi-functional seat adapted to high density seating which can offer a range of features for the occupant with little or no weight penalty.

According to a first aspect of the invention there is provided a backrest for a seat comprising a backrest support and a backrest cushion, said cushion being attached to said support at the top thereof and being movable away from said support at the bottom thereof to define a storage volume.

A backrest according to the invention is thus movable from a normal condition, in which the cushion lies against the support, and semi-reclined condition in which the angle of the cushion to the vertical is substantially increased. The volume created behind the seat cushion in the semi-reclined condition is substantially triangular in section.

It will be appreciated that in the normal condition the seat pan is exposed to the maximum extent, but in the semi-reclined condition is partly obscured by the lower portion of the backrest cushion. This effectively creates a semi-reclined seat that enables an occupant to stretch out with the buttocks supported by the front edge of the seat pan. Such an arrangement may provide greater comfort if the occupant is confined in the seat for a long period, such as on an aircraft, yet does not reduce the space available to occupants of the seat rows in front and behind because the backrest support is not moved. High density seating is facilitated.

In essence the backrest cushion hinges out from the bottom, and may have a latch to retain it in one or more advanced conditions, or may rely upon packing between the back of the cushion and the front of the support. An inflatable bladder may for example be provided.

The backrest cushion may further include a forward stop to ensure that a minimum depth of seat pan is retained at all times. The seat pan may comprise a seat cushion.

The backrest support may comprise any kind of frame or the like, adapted to support the backrest cushion for movement thereon; it may for example comprise a hard shell moulding for attachment to a supporting frame.

The backrest support may extend across several backrest cushions, such as in a bank of aircraft or theatre seats, and each cushion may be independently movable in the manner of the invention.

For the avoidance of doubt, the terms backrest cushion and seat cushion do not imply any particular level of resilience or compliance - they are merely used as convenient identifiers for the seat parts which directly contact the back and buttocks of a seat occupant.

According to a second aspect of the invention there is provided a height adjustable headrest for an upholstered backrest of a seat, the backrest upholstery including two upright slits therein at the mid-upper portion, and the headrest comprising a head cushion having lateral tie on the rear side thereof, said tie being adapted for passing through said slits and being connected at either end to said cushion.

In conjunction with the slits, the tie provides a frictional restraint whereby the headrest cushion can be positioned up and down to the extent permitted by the slits. Inherent friction and/or head pressure from the seat occupant tends to maintain the headrest cushion in the preferred position, yet the cushion is freely movable to the most comfortable position.

It will be appreciated that the cushion may comprise solely padding and upholstery (for example a textile covering), and that the tie may also comprise upholstery material. Accordingly the headrest cushion of the invention avoids the weight and complication associated with conventional moving headrest mechanisms.

The tie preferably comprises a flat strip of e.g. upholstery material attached to the rear side of the headrest cushion by a hook and loop fastener, at one or both ends. Such an arrangement allows for ready replacement for cleaning and the like.

Multiple seating, for example in aircraft, utilizes the backrests of one seat row to provide features for occupants of the next rearward seat row. Typically a low seat pocket is provided in each backrest of the exclusive use of the seat occupant immediately to the rear. Literature, for example inflight magazines and safety information is provided in each seat pocket.

In a third aspect the invention provides a rear facing literature holder between adjacent backrests of one seat row so as to be accessible by occupants of two adjacent seats in the next rearward row. The literature rack may be provided at eye level, for example between the usual rear facing video screens of an aircraft seat. The literature rack may overlap each individual backrest to some extent or be part of a multiple backrest shell of several seats. The eye level position allows greater legroom, and reduces the weight of in-flight literature to be carried and replaced. Furthermore the literature is more likely to be seen and read by occupants.

Frequently high density seating, in particular aircraft seats, provides for backrest audio and video entertainment systems. Typically electronic components and control systems are housed within a seat or within a floor mounted box, which reduce the space for the feet of occupants. Such boxes may also obstruct a footrest, or render the provision of a footrest impossible.

The electronics box is usually referred to as IFE Box (In-Flight Entertainment Box), and consists of a computer server that distributes electronic data from the main server of the aircraft to the individual monitors. Usually one IFE serves 2-3 monitors in a row. Thus, for aircraft with video at every seat, there is usually a box underneath one of the seats in a seat row.

These boxes come in various shapes and sizes, but are typically the size of a small computer and substantially rectangular. The boxes are typically attached to a piece of seat frame legs, touching the floor. Some arrangements have the box installed hanging underneath the seat-pan.

According to a fourth aspect of the invention there is provided a footrest for high density seating and comprising a box-like housing having a footrest face at an oblique angle to a floor surface, said housing defining an equipment space.

The footrest is thus provided on the equipment enclosure and makes a virtue of a necessity. The housing may be floor mounted, or form part of a structure of the seat or row of seats. The oblique face is typically long enough to support an average foot.

This aspect allows provision of a footrest, to permit a seat occupant to brace or support themselves, in circumstances where a footrest might not be provided owing to the requirement for a conventional equipment housing. The housing may of course be used for equipment other than associated with video or audio systems. The footrest box allows seat weight to be reduced and may increase the available space in which a footrest can be provided.

A common feature of multiple high density seating, particularly an aircraft, is the provision of a cup holder on each seatback. Such holders are inevitably of light weight construction, usually foldable, and as a consequence are easily damaged, which increases the maintenance and repair cost. A cup holder may be provided on a seatback tray, but can only be used when the seat tray is up.

According to a fifth aspect of the invention, a seat backrest includes a cup holder recessed therein at one lateral side so as to be accessible to an occupant of the next rearward seat. By recessing the cup holder at one side, the volume necessary can be borrowed from the somewhat thicker side portion of the backrest which is usually shaped to support an occupants back.

A further advantage of the side position is that the usual seat tray can also be provided if required, either as a slightly narrower tray or as a tray with a cut-out to give access to the cup ho lder.

Since the cup holder is fixed in the seatback, and has no moving parts, breakage and repair is obviated. Typically the cup holder comprises a recess having a lip at the lower edge to provide a cup restraint, and may be moulded as part of a seatback shell.

It can be somewhat awkward in high density seating to hold a book or tablet in a comfortable position for reading. In a sixth aspect the invention provides for a fold-up backrest tray to be restrained in a partly open condition whereby the upper edge thereof provides a rest for a book tablet or the like. The item supported on the rest may itself lean against the seatback so as to be in a semi-upright condition at a convenient eye line. Preferably the backrest tray has multiple restrained conditions to allow the angle of the item to be selected having regard to eye line, reflections and the like. A friction grip may be sufficient, but in the preferred embodiment the tray is latchable in one or more partially open conditions.

Occupants of high density seating may be provided with headphones for use with audio or video systems. Typically there is no place to put the headphones when not in use, and they may become damaged or otherwise trapped in a seat mechanism. On the other hand a permanent hook for headphones may snag clothing when passengers move along a seat row.

According to a seventh aspect, a headphone jack plug includes an integral or integrated hook whereby the headphones may be retained when not in use. The hook can be of any suitable shape and form, depending on the location of the jack plug socket. Snagging is reduced or eliminated since the headphones will be stored on the hook if the passenger leaves the seat, or the hook will be collected with the headphones at the conclusion of the relevant event, for example a flight.

A vanity mirror is provided in many examples of high density seating, and this feature may avoid unnecessary movement of seat occupants, particularly in aircraft. Such mirrors are an additional component, and are usually provided with a cover so as not to be distracting when not in use. In-seat audio and video systems may be provided with a wired handset, generally latchable in a seat armrest or seat backrest.

According to an eighth aspect of the invention, a wired handset of high density seating has a front command side and a rear side, the rear side comprising a mirror.

Thus the normal control buttons and input devices are generally provided on one face of a lozenged or oblong handset, and the rear side is mirrored, or has a mirror attached thereto. In the latched condition the command side always is exposed, and accordingly the mirror is removed from sight without additional measures.

Other features of the invention will be apparent from the following description of preferred embodiments, shown by way of example only in the accompanying drawings, in which:
Figs. 1 and 2 illustrate dual aircraft seats, incorporating aspects of the invention, from the front and from the rear.
Fig. 3 illustrates a side elevation of an aspect of the invention relating to an improved backrest cushion.
Fig. 4 illustrates a perspective front view of an improved headrest cushion.
Fig. 5 illustrates the headrest cushion arrangement of Fig. 4, partly in section.
Figs. 6 and 7 illustrate an improved seat footrest.
Fig. 8 illustrates an improved cup holder.
Fig. 9 illustrates an improved tray table and rest for reading material.
Fig. 10 illustrates an improved headphone hook and vanity mirror.

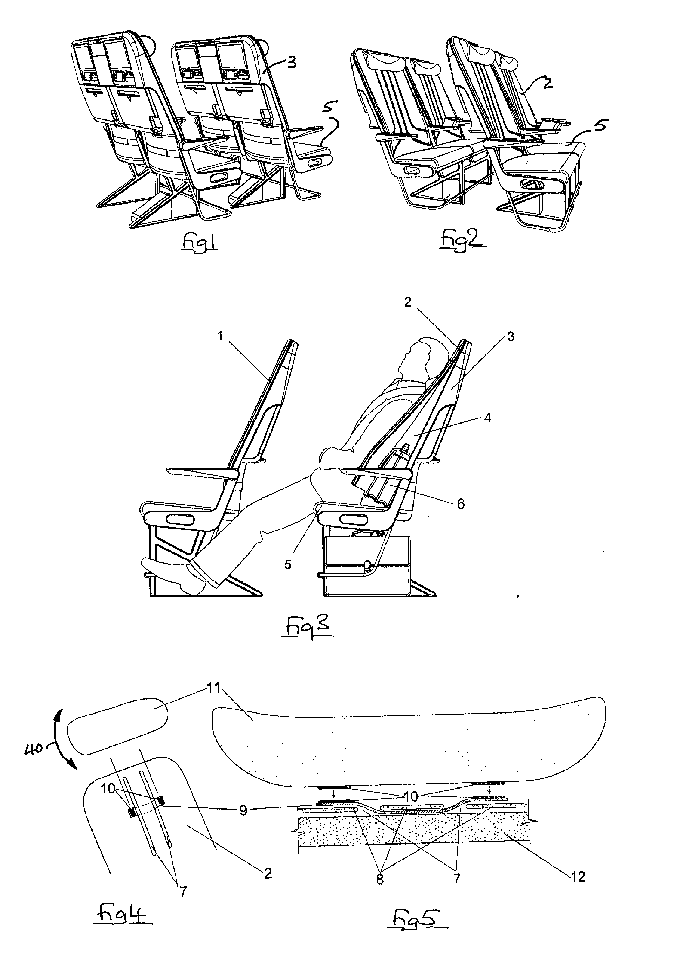

With reference to the drawings, Figs. 1 and 2 show two rows of high density aircraft seating. For illustrative purposes one pair of seats is shown in each row, but each row could contain many more seats whilst incorporating the principles of the invention which will be described in this specification. Furthermore, although the illustrated embodiments show aircraft seats, the inventive feature can be applied to high density seating for any application, such as in theatres, lecture halls and other modes of transport.

Each seat comprises a frame, seat pan, backrest, headrest, and a variety of optional features for the seat occupant, and the occupant of the next rearward row. In some cases features of the seats are common, such as the frame or backrest shell.

Fig. 3 illustrates a first aspect of the invention in which the seat 1 comprises a hard shell backrest 3, for example a plastics moulding on which is mounted a backrest cushion 2 comprising, for example, an upholstered foam insert. The backrest cushion 2 is attached to the shell 3 at the top edge, but is movable away at the bottom to define a somewhat triangular space 4. This space 4 may be used to store a briefcase 6, instead of placing it under the seat with a consequent loss of legroom. The space 4 may also be used for clothing, a blanket or the like, and provides a secure location for valuables.

The backrest cushion 2 may be loose, in the sense that when housed within the shell 3 no further restraint is required. Alternatively the cushion may be retained against the shell by a fastener, such as a hook and loop fabric, which can be easily disengaged. The backrest cushion may be restrained against excessive forward movement by a strap or the like.

Positioning of the backrest cushion may be dependent upon what is placed within the space 4, or a latch of any suitable kind may be provided, for example on the seat armrests. An inflatable device and hand pump may for example be used to urge the backrest cushion away from the shell.

As will be appreciated from Fig. 3, the forward position of the backrest cushion allows an occupant to adopt a semi-reclined position, which may be more comfortable if the occupant is confined in the seat for a long period. The occupant is supported on the forward portion of the seat pan 5, as illustrated.

Figs. 4 and 5 show an improved lightweight and adjustable headrest cushion 11 consisting of an upholstered foam unit without any hard structure. The seat backrest cushion 2 also comprises upholstery 8 on a foam core 12, and two upright parallel slits 7 are provided in the front face of the upholstery, symmetrically about the seat centreline, and about 40-80 mm apart. A fabric flap 9, of about 50mm width, passes through the slits 7, and under the central web of upholstery, each end of the flap being attached to the headrest cushion 11 by hook and loop fasteners 10. Friction between the flap 9 and the foam core 12 keeps the headrest cushion in a desired vertical position, yet the slits allow easy vertical adjustment. The fasteners permits easy replacement of the headrest cushions. This aspect of the invention provides a very lightweight, yet adjustable headrest cushion; a degree of angular adjustment (arrow 40) typically ±20° is also possible so that a seat occupant can best obtain a comfortable position.

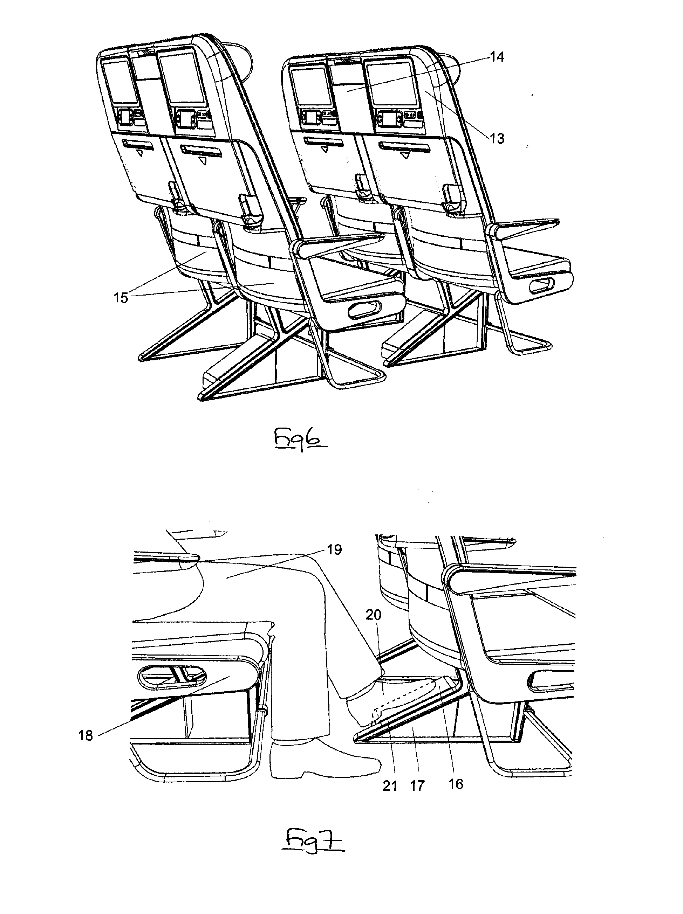

Fig. 6 illustrates a seatback literature rack 14 centred between two seats of a row approximately at eye level. The seatback 13 comprise common shell of two or more seats of the row, and supports video screens, tray tables and the like, as illustrated.

The rack 14 is located in an otherwise unused space and provides for greater knee room than is provided by the usual seat pocket. The rack permits one literature set to be shared between two occupants of the next rearward row, and thus provides a weight and cost saving, which may be considerable in the case of a wide body aircraft with high density seating. Furthermore such literature (magazines, safety card etc.) are more easily seen by seat occupants, and more easily checked by service personnel. The rack of the invention may also be used for personal literature.

Figs. 6 and 7 also illustrate a combined footrest/equipment housing 17 located under a seat row. Such housings are typically rectangular, and are usually used for components associated with seatback video and audio systems. In the invention, the rear facing side 16 of the housing 17 is angled at about 30°-40° to the horizontal, so as to provide a rest for a foot 20 of a rearward seat occupant. The footrest surface is preferably non-slip.

The seat frame (legs) 21 may be slanted rearwardly to match the slope of the footrest, so as to give an extended support surface for the foot; this arrangement may also increase seat frame stiffness and stability.

Generally speaking the shape of the equipment housing 17 is not important provided that sufficient volume is provided. This aspect of the invention makes a virtue of a necessity, and can further improve comfort of a seat occupant over an extended period.

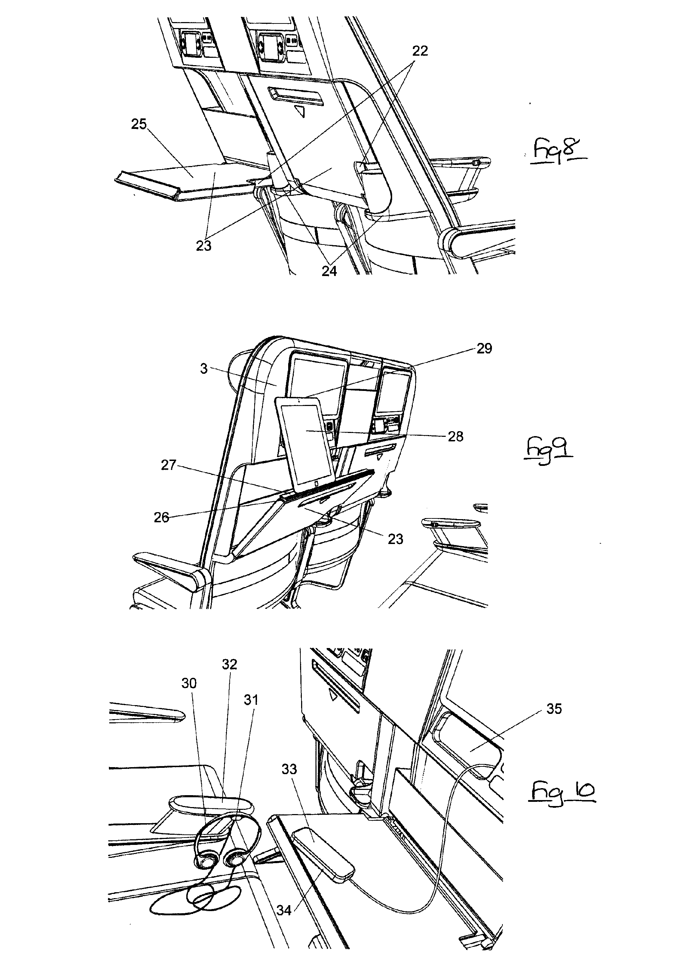

An improved cup holder is illustrated in Fig. 8 and comprises a backrest moulding incorporating a recess 22 at one side, typically the aisle side, having a support surface 24 with a low cup retention lip. No moving or folding components are necessary. When placed within the recess, a cup is substantially enclosed at the sides so as to not substantially impede movement of occupants into and out of neighbouring seats. The cup recess is provided in the region of a shaped side support of the backrest cushion where additional unused volume is provided; no increase in overall seat depth is necessary.

A folding tray 23 of the usual kind is provided. A side portion adjacent the hinged lower edge is cut away to provide for easy placement and removal of a cup, both when the tray is in use and when it is stowed. Alternatively a slightly narrower rectangular tray may be provided.

Fig. 9 illustrates how the seat tray 23 can be latched in a partly open condition to support a tablet computer 28 being used by a rearward seat occupant. The free edge 26 of the seat tray comprises an open trough 27 to support the tablet (or a book) close to eye level, the upper edge 29 of the tablet (or book) resting directly against the seatback. The trough helps to maintain pages of a book in the open condition, and to prevent a tablet or book from becoming dislodged.

Several latching positions may be provided, or a friction device, so that the angle of the tray 23 can be best selected to give a preferred viewing angle.

Fig. 10 illustrates two further aspects of the invention. Headsets 30 are usually provided for aircraft passengers, and include a jack plug 31 to be inserted into a socket on, for example, an armrest 32. The jack plug of this aspect of the invention includes a hook upon which the headset may be hung when not in use. This arrangement avoids clutter, especially when a seat occupant is confined for long periods. By 'hook' we include any device moulded with the jack plug which can used to removably retain the headset in a temporary manner.

Seatback video systems typically comprise a hand held wired control unit 34, which can be used when stowed in a seatback recess 35, or when unclipped (as illustrated). The back of the control unit 34 may be mirrored (e.g. plated), or have a vanity mirror attached, for the use of the seat occupant.

This arrangement may avoid unnecessary visits to the washroom, and furthermore allows the mirror to be manoeuvred by the user as desired, thus overcoming the problem of a mirror fixed to the seatback. When stowed, the mirror is obscured, and accordingly not a distraction or a source of reflections.

The aspects of the invention described above may be used in any combination in a seat or seat assembly, according to the required specification. No limitation of materials, size or proportion is implied by the illustrations, save as specified in this description.

## Claims

1. A backrest for a seat comprising a backrest support and a backrest cushion, said cushion being attached to said support at the top thereof and being movable away from said support at the bottom thereof to define a storage volume.

2. A backrest according to claim 1, wherein away movement of the cushion is restricted.

3. A backrest according to claim 1 or claim 2, wherein the cushion is latchable in a condition spaced from the support.

4. A backrest according to any preceding claim, and having a plurality of said cushions thereon, each cushion being independently movable.

5. A seat comprising a backrest according to any preceding claim, and a seat pan fixed relative to said support.

6. A height adjustable headrest for an upholstered backrest of a seat, the backrest upholstery including two upright slits therein at the mid-upper portion, and the headrest comprising a head cushion having lateral tie on the rear side thereof, said tie being adapted for passing through said slits and being connected at either end to said cushion.

7. A headrest according to claim 6, and consisting solely of padding and upholstery material.

8. A seat backrest defining a plurality of seats, and comprising a rear facing literature holder centred between adjacent seats for access by occupants of two corresponding and immediately rearward seats.

9. A seat comprising a footrest in the form of a box-like housing and having a rear facing footrest face at an oblique angle to a floor mounting plane.

10. A seat back incorporating a cup holder in the rear face at one side, the cup holder comprising a recess and having a cup support surface and an upstanding lip for said surface.

11. A seat back according to claim 10, and further defining a foldable tray, said tray having a width overlapping said cup holder, and further including a cut-out at one side to permit access to said cup holder when the tray is both stowed and in use.

12. A seat back comprising a tray foldable from a substantially upright stowed condition to a substantially horizontal use condition, the tray being latchable in an intermediate condition, the free edge of the tray defining a substantially horizontal support for a tablet, book or the like.

13. A seat back according to claim 12, wherein said edge is defined by a trough adapted to receive a tablet, book or the like.

14. A wired headset comprising a resilient band and ear pieces, the headset including a jack plug defining a hook from which the headset can be suspended in use.

15. A seat back defining a recess and a wired handset of a video-audio system, said handset being engageable in the recess to occlude one face thereof, and said surface being mirrored.
